# EUROPEAN PATENT APPLICATION

(11) **EP 3 730 013 A1**
(43) Date of publication of application: **28.10.2020**
(21) Application number: 20171544.8
(22) Date of filing: 27.04.2020
(51) Int. Cl.: A47J 37/06

(54) **BAKING DEVICE WITH HEIGHT ADJUSTMENT MECHANISM**

(30) Priority: 25.04.2019 BE 201905280
(71) Applicant: Pitteurs, Benny Marcelinus Lydie, 9450 Denderhoutem (BE)
(72) Inventor: Pitteurs, Benny Marcelinus Lydie, 9450 Denderhoutem (BE)
(74) Representative: Arnold & Siedsma

(57) **Abstract**

Cooking device comprising a first cooking plate and a second cooking plate between which a bake can be baked; at least one hinge which couples the first cooking plate and second cooking plate such that the first and second cooking plate are movable relative to each other between an open and a closed position, wherein the at least one hinge has a height-adjusting mechanism configured to set a distance between the first and second cooking plate in the closed position.

## Description

The invention relates to a cooking device, such as a waffle iron, pancake cooking plate or grilling apparatus, comprising at least a first and a second cooking plate between which a bake can be baked.

Waffle irons for baking various types of waffle, such as Brussels waffles or Liege waffles, are generally known and typically comprise an upper and a lower cooking mould between which the waffles are baked. In known waffle irons the cooking moulds typically have recesses shaped in accordance with the desired final waffle shape. When the bake, for instance waffle batter, is introduced, the weight thereof will cause the bake to spread out over the recesses when the upper and lower cooking moulds are closed manually, and a waffle having the shape of the recesses will thus be baked. Owing to the recesses, the bake offers little or no resistance to the closing of the upper and lower cooking mould.

Known cooking devices typically have a handle which is arranged close to the cooking plates. A cook or other user can thus close the cooking plates relative to each other. Owing to the typical recesses in the cooking plates which form a cooking mould, there is sufficient space for the bake to spread out therein. The weight of the cooking plates usually suffices to allow the cooking plates to support on each other in a closed position. In some cases a minor additional manipulation of the handles by a user suffices to allow the cooking plates to support on each other in closed position. Known cooking devices have the drawback that when wafer-thin bakes are baked, a relatively large mass of bake is situated between the two cooking plates, which mass offers resistance against the closing of the cooking plates. Because the cooking plates have substantially no or few recesses and are pressed toward each other, the bake may be pressed out from between the cooking plates.

The present invention has for its object to provide a cooking device which closes the cooking plates in improved manner.

The invention provides for this purpose a cooking device comprising a first cooking plate and a second cooking plate between which a bake can be baked, at least one hinge which couples the first cooking plate and second cooking plate such that the first and second cooking plate are movable relative to each other between an open and a closed position, wherein the at least one hinge has a height-adjusting mechanism configured to set a distance between the first and second cooking plate in the closed position. Because the at least one hinge has a height-adjusting mechanism, this allows the cooking plates to be held at a maximum distance from each other in a closed position. A further advantage hereof is that the thickness of the bake can be adjusted using the height-adjusting mechanism.

The hinge preferably comprises a pin which is arranged on at least one of the first or second cooking plate and a pin housing which surrounds the pin, wherein the pin housing is arranged on the other of the at least one first or second cooking plate, such that the pin is rotatable in the pin housing.

The pin housing preferably has an elongate cavity along an upward direction in order to give the pin a freedom of movement in the upward direction. A hinge typically allows no displacements, only a rotation. Because the pin housing has an elongate cavity which is oriented along an upward direction, the pin can move in an upward direction. The pin housing thus gives the pin a predetermined clearance in upward direction, whereby the height can be adjusted in simple manner.

The pin housing is preferably provided with at least one hinge adjusting screw which limits a freedom of movement of the pin in the upward direction. Because the pin is displaceable along the whole height of the elongate cavity, the pin housing provides only one possible maximum height setting for the cooking plates without adjusting screw. By providing the pin housing with at least one hinge adjusting screw the height of the elongate cavity can be reduced, whereby the displacement of the pin is limited. An improved height-adjusting mechanism with variable adjustment is thus provided.

At least one of the first and second cooking plate is preferably provided with at least one cooking plate adjusting screw which holds the first and second cooking plates at a minimum predetermined mutual distance in the closed position. The inventiveness hereof lies in the insight that the first cooking plate, which is for instance connected to the pin, is pulled askew relative to the second cooking plate when they are pressed toward each other because the mass of bake will function as a tilting point. Due to the tilting action caused by the mass of bake, the first cooking plate will after all move in the height in the hinge, but on the opposite edge will be pulled very close against the second cooking plate due to use of a force. By providing at least one cooking plate adjusting screw this rotation of one of the cooking plates relative to the other can be countered, and the cooking plates will be held at a distance from each other in a closed position. If desired, the user can adjust the height thereof in order to for instance place the cooking plates substantially parallel to each other. The exact thickness of the wafer-thin bake can hereby further be set by positioning of the cooking plate adjusting screw.

The cooking device preferably further has a lever which is connected pivotally to the first cooking plate and is provided with an engaging segment configured to engage the second cooking plate in the closed position in order to press the cooking plates toward each other. The inventiveness hereof is based on the insight that when wafer-thin bakes are baked, substantially no or very few recesses are present in the cooking plate. In other words, the first and second cooking plate take the form of a substantially flat plate. When a mass of bake is present between the two cooking plates, the mass resists the displacement of the cooking plates from the open to the closed position. Due to the mass of bake, the cooking plates cannot be closed sufficiently using conventional cooking devices. For baking of wafer-thin bakes the cooking plates further also have to be held in a sufficiently closed position for some time. This requires an effort for a longer period of time during which the cooking plates are pressed into the closed position. During baking of wafer-thin bakes the cooking plates must further be pressed together quickly in order to obtain a uniform bake. Because the cooking device according to the invention is provided with a lever, the cooking plates can be displaced between the open and closed position in improved manner and thus press together the cooking plates. This is because the lever which is arranged on the first cooking plate allows an increased force to be exerted on the second cooking plate when the cooking plates are in the closed position. The lever further also advantageously exerts the force which is necessary to hold the cooking plates in the closed position.

The lever is preferably arranged on an edge lying opposite the at least one hinge. It will be apparent to the skilled person that a first and second lever action are hereby realized. On the one hand, a first lever is created by arranging the lever on the edge lying opposite the at least one hinge. This lever allows a closing torque to be applied to the cooking device. This closing torque is directly proportional to a distance between the lever and the hinge. Because the lever is arranged on the edge lying opposite the at least one hinge, the distance between the lever and the hinge, around which the cooking plates rotate, and consequently the closing torque, is maximal. On the other hand, the lever itself also exerts its own lever action when the second cooking plate is engaged, this being the second lever action. This second lever action has already been described above. Individually and particularly together, the two different lever actions provide an improved manner of pressing the cooking plates toward each other.

The lever is preferably connected via a shaft to the first cooking plate. The lever preferably comprises a handling segment. The engaging segment is connected fixedly to the handling segment such that by pivoting the engaging segment a force is exerted on the second cooking plate by the engaging segment. The cooking device thus provides in simple manner a lever for the purpose of pressing the cooking plates toward each other in improved manner.

A distance over which the handling segment extends is preferably at least 5 times greater than a distance over which the engaging segment extends, preferably at least 6 times greater, preferably at least 7 times greater. Because the distance over which handling segment extends is greater than the distance over which the engaging segment extends, the force required for pressing the cooking plates toward each other decreases proportionally. It is hereby physically easy for the user of the cooking device to press the cooking plates toward each other. It will be apparent to the skilled person that not only a user, such as a cook, can operate the cooking device, but that use can also be made of an actuator to press the cooking device shut. A further advantage hereof lies in the insight that the cooking plates radiate heat. Because the distance over which the handling segment extends is a number of times greater than the distance over which the engaging segment extends, the distance between the cooking plate and an outer end of the handling segment is also great. The outer end of the handling segment is hereby sufficiently removed from the heat radiated by the cooking plates.

The second cooking plate is preferably provided with a protrusion on which the engaging segment engages. This enables the engaging segment to engage the second cooking plate in simple manner. A further advantage hereof lies in the insight that the manufacturer of the cooking device can position the protrusion in a manner such that the cooking device is in a stable equilibrium when a force is exerted on the lever. In other words, by exerting a force on the lever the cooking device does not tilt, and the cooking device is consequently in a stable mechanical equilibrium.

The engaging segment is preferably provided with an opening in which the protrusion can be received. The opening allows the protrusion to be received in the engaging segment in simple manner during initial engagement of the protrusion. The inventiveness hereof lies in the insight that the cooking plates are hot and that, once the bake is arranged on a cooking plate, closing the cooking device and then pressing the cooking plates toward each other is done with some haste. This prevents the bake from already becoming cooked on one side, as this would result in a non-uniformly cooked bake. In the worst case, this would even result in a burnt bake. Because the engaging segment is provided with an opening, the protrusion can be engaged at a relatively high speed, whereby a uniformly cooked bake is guaranteed.

An engaging edge preferably bounds the opening. The engaging edge is provided to engage the protrusion and press the cooking plates toward each other in the closed position. The engaging edge is formed when the opening is cut into the engaging segment. The engaging edge is the edge of the engaging segment that makes contact with the protrusion. The engaging edge hereby transmits a force to the second cooking plate.

The handling segment preferably has a length, measured from the shaft, which is preferably greater than 30 cm, more preferably greater than 40 cm, most preferably greater than 50 cm. This reduces the force necessary for pressing the cooking plates toward each other.

The cooking device preferably further comprises a splash edge situated at the position of the cooking plates and extending at a distance from the cooking plates along substantially a whole periphery of the cooking plates, such that outflow is at least partially obstructed. The inventiveness of this solution lies in the insight that when the cooking device is being closed, particularly when the cooking plates are being pressed toward each other, the water present in the bake will evaporate. The water will hereby transpose from water in a liquid phase into steam, resulting in a great increase in volume. A pressure difference thus results between the steam situated between the plates and the environment outside the cooking device. Because the cooking moulds are situated closely opposite each other for the purpose of creating a wafer-thin wafer, the speed with which the steam moves outward will be high, and the steam will blast out from between the cooking plates. This results in a dangerous situation for the cook, who can burn him/herself on the steam jet. Because the cooking device is provided with a splash edge, the cooking device provides an improved safety for a user thereof.

The cooking device preferably has a heat zone with boundaries which lie a maximum of 30 cm from a periphery of the first and second cooking plate. The lever comprises a handle which is situated outside the heat zone of the cooking device. Steam vapours flowing out from between the cooking plates by definition have a temperature of 100°C or hotter. These steam vapours lose their kinetic energy quickly once they have flowed out from between the cooking plates. Because the lever comprises a handle which is situated outside the heat zone of the cooking plates, i.e. outside the immediate vicinity of the cooking plates, the handle is not or practically not exposed to the hot steam vapours.

The above stated and other advantageous features and objects of the invention will become more apparent, and the invention better understood, on the basis of the following detailed description when read in combination with the accompanying drawings, in which:
figure 1 shows a perspective view of an embodiment of the cooking device;
figure 2 shows a detail view of an embodiment of a part of the cooking device;
figure 3 shows a schematic representation of the pressing toward each other of the cooking plates;
figure 4A shows an embodiment of the lever;
figure 4B shows an alternative embodiment of the lever;
figure 4C shows an alternative embodiment of the lever;
figure 5 shows a side view of an embodiment of the cooking device;
figure 6A shows a perspective view of an embodiment of the cooking device with splash edge;
figure 6B shows a cross-section of a part of the embodiment of the cooking device with splash edge according to figure 6A.

The same or similar elements are designated in the drawing with the same reference numerals.

The invention will now be further described on the basis of an exemplary embodiment shown in the drawing.

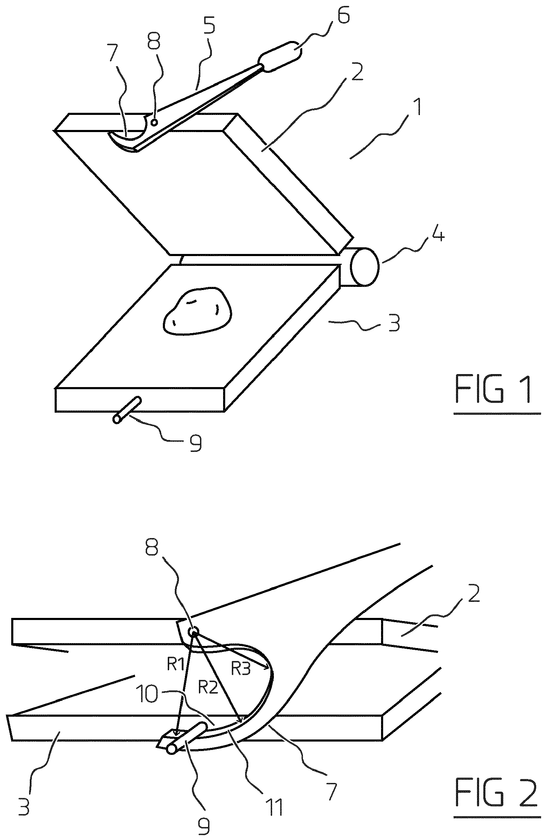

Figure 1 illustrates a first embodiment of cooking device 1. Cooking device 1 comprises a first cooking plate 2 and a second cooking plate 3, between which a bake can be baked. Each cooking plate 2, 3 preferably comprises a cooking mould and a heating part (not shown) which are operatively connected so that the cooking mould can be brought to a desired temperature during baking. The first cooking plate 2 has a substantially flat surface which in a closed position is directed toward the substantially flat surface of the second cooking plate 3. Cooking plates 2, 3 can further be provided with a temperature sensor (not shown), using which a control device (not shown) can control the temperature of cooking plates 2, 3. A bake is typically a batter for cooking a waffle or the like. The bake can however also be another mixture of food products.

Cooking device 1 further comprises at least one hinge 4 which couples first cooking plate 2 and second cooking plate 3 such that the first and the second cooking plate are movable relative to each other between an open and a closed position. In the context of the description an open position is defined as the position the cooking plates are in when bake is arranged on the cooking plates or when the bake is removed from cooking plates. In the context of the description a closed position is defined as the position in which both cooking plates make contact with the bake. The closed position can vary between an initial closed position and a final closed position. The initial position is defined as the position in which the bake first makes contact with the first cooking plate and the second cooking plate when they move toward each other. The final closed position is the position in which the cooking plates lie substantially parallel relative to each other during pressing together of the cooking plates. In this final closed position the cooking plates lie at a predetermined distance relative to each other. The final closed position is determined by a user and can be different for different products. It will be apparent to the skilled person that pressing the cooking plates toward each other comprises of moving the cooking plates from the initial position to the final position. It will further also be apparent that the cooking plates can lie at a plurality of intermediate positions between the initial and the final position. The at least one hinge 4 is arranged at the position of an edge of each of the cooking plates. Hinge 4 can also be formed integrally with the cooking plates 1, 2. A part of hinge 4 can thus for instance be formed integrally with first cooking plate 2 and another part of hinge 4 can be formed integrally with the second cooking plate 3. Hinge 4 is situated on an opposite side of cooking device 1, opposite the user thereof.

Cooking device 1 further comprises a lever 5. Lever 5 is connected pivotally to first cooking plate 2 and is provided with an engaging segment 7 which is configured to engage the second cooking plate 3 in the closed position and thus press the cooking plates toward each other. Lever 5 is arranged on an edge lying opposite the at least one hinge. When closing cooking device 1 a user, or an actuator, rotates first cooking plate 2 in the direction of second cooking plate 3 using the hinge. First cooking plate 2 is displaced from the open position to the closed position, particularly to the initial closed position or to an intermediate position. After this, first cooking plate 2 can be pressed toward second cooking plate 3 by the engagement of engaging segment 7 on second cooking plate 3 and thus move the first cooking plate to the final closed position.

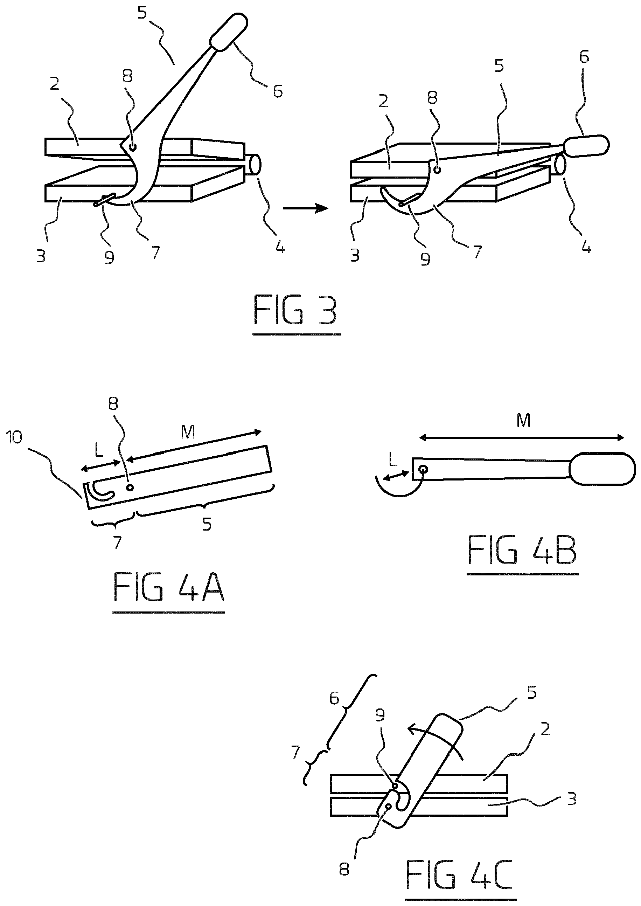

Lever 5 further comprises a handling segment 6 and is connected via a shaft 8 to first cooking plate 2. Handling segment 6 is provided for operating lever 5. Handling segment 6 will pivot lever 5 about the shaft. Engaging segment 7 is connected fixedly to handling segment 6 such that a force is exerted on second cooking plate 3 by the pivoting of handling segment 6. It will be apparent to the skilled person that any embodiment of lever 5 is possible, as long as engaging segment 7 engages second cooking plate 3 in the manner of a lever. An embodiment as shown in figure 4B is thus for instance also possible.

Second cooking plate 3 is further provided with a protrusion 9 on which engaging segment 7 engages. Protrusion 9 is provided on the same side of cooking device 1 as lever 5.

Figure 2 illustrates a detail view of an embodiment of a part of the cooking device. Figure 2 particularly illustrates a front side of the first and the second cooking plate. Arranged on first cooking plate 2 is the shaft 8 which couples lever 5 pivotally to first cooking plate 2, wherein engaging segment 7 thereof engages the protrusion 9 of the second cooking plate. Engaging segment 7 is provided with an opening 10 in which protrusion 9 can be received. The opening has a size which preferably amounts to at least three times the diameter of protrusion 9, preferably at least 5 times, more preferably at least 8 times. Because the opening is appreciably larger than the diameter of the protrusion, the protrusion can be easily received in the opening in both the initial closed position and in a plurality of intermediate closed positions. Ring segment 7 can for instance be manufactured from steel or another material from which the shape of opening 10 can be cut. The opening 10 is surrounded by an engaging edge 11 which is provided to engage protrusion 9 in the closed position. Engaging edge 11 thus bounds the opening 10. Engaging edge 11 is formed such that when the lever is handled, a force is exerted on protrusion 9. Engaging edge 11 is formed such that the force exerted on protrusion 9 remains constant or rises. Engaging edge 11 can for instance be a part of a circle. In an alternative embodiment engaging edge 11 can also have a different radius for each point of the engaging edge 11 to shaft 8. The radius R1 measured from shaft 8 to the point where engaging segment 7 begins can thus be greater than the radius R2 measured from shaft 8 to the centre of engaging edge 11. The radius R2 can further be greater than the radius R3 measured from shaft 8 to the point where engaging edge 11 ends. In other words, the engaging edge can be expressed as a function wherein the radius of engaging edge 11 relative to shaft 8 decreases as protrusion 9 travels further along engaging edge 11. The engaging edge can be formed such that the force which is exerted by engaging segment 7 on protrusion 9 increases when the lever is pivoted. The engaging edge can alternatively also be formed such that a force during the initial engagement of protrusion 9 is maximal. A further advantage is that engaging segment 7 can engage protrusion 9 when first cooking plate 2 lies at the beginning of a closed position. Further pivoting of handling segment 6 will hereby press the cooking plates toward each other.

Figure 3 illustrates for this purpose the pressing toward each other of the first and the second cooking plate, wherein first cooking plate 2 is in the initial closed position in figure 3A. In this position the engaging segment 7 can engage the protrusion 9 of second cooking plate 3. Further rotation or pivoting of handling segment 6 will thus bring cooking plates 2, 3 into a further closed position. It will be apparent to the skilled person that the first and second cooking plate are pressed closer toward each other by the pivoting of handling segment 6. Although figure 2 does not illustrate this, the opening of the engaging segment can be provided with a groove in which the protrusion can rest in the final closed position. The groove hereby locks the cooking plates in the final closed position, whereby a constant force need not be exerted on the handle of the handling segment during baking.

Figures 4A, 4B and 4C illustrate several embodiments of lever 5. Figure 4A illustrates particularly that lever 5 comprises an engaging segment 7 and a handling segment 6, wherein engaging segment 7 is located opposite handling segment 6, on the other side of shaft 8. In this alternative embodiment engaging segment 7 has an opening 10 in the form of a groove in which protrusion 9 can be received. An advantage of this embodiment is not only that the engaging and the pressing toward each other of the cooking plates is improved, but further also that when the cooking plates are opened again, the groove has a pushing edge which is located opposite the engaging edge and with which the lever pushes open the cooking device after this device has been in wholly closed position. The opening has a size which is substantially equal to the diameter of the protrusion. This has the result that the protrusion can only be engaged in the initial closed position and cannot be engaged optimally in an intermediate closed position.

Figure 4B illustrates another embodiment of lever 5. In this alternative embodiment the engaging segment takes the form of a hook-like outer end of the lever which engages the protrusion 9 of second cooking plate 3. Figure 4C illustrates yet another embodiment of lever 5, with the difference that lever 5 is arranged on second cooking plate 3 and engages first cooking plate 2. For this purpose protrusion 9 is arranged on the first cooking plate and engaging segment 7 at least partially overlaps handling segment 6. The shape and orientation of opening 10 must be adapted for this purpose.

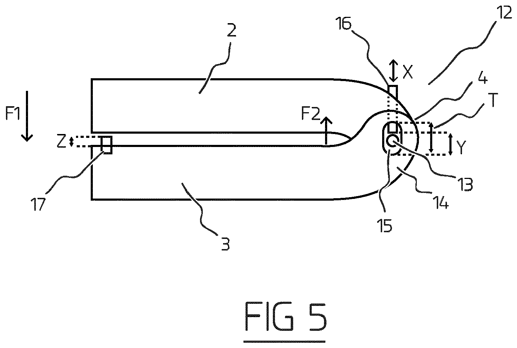

Figure 5 illustrates a side view of cooking device 1. The first and second cooking plates 2, 3 are particularly shown in a closed position. In figure 5 hinge 4 comprises a height-adjusting mechanism. Hinge 4 comprises a pin 13 and a pin housing 14 which surrounds the pin 13. As described above, hinge 4 can be formed integrally with cooking plates 2, 3. It will thus be apparent to the skilled person that pin 13 is for instance formed integrally with first cooking plate 2 and pin housing 14 is formed integrally with second cooking plate 3. The cavity 15 of pin housing 14 surrounding the pin has a form which is elongated in a height direction. Pin 13 is hereby displaceable in the height direction. Cavity 15 extends over a distance Y. Pin housing 14 is further provided with a hinge adjusting screw 16.

Figure 5 illustrates that hinge adjusting screw 16 is arranged on an upper side of pin housing 14 and is controllable along a distance X. It will be apparent to the skilled person that the hinge adjusting screw can also be arranged on a lower side of the pin housing. The hinge adjusting screw is controllable so that at least a part of the hinge adjusting screw extends in the elongate cavity of the pin housing. For this purpose a threaded bore which surrounds the hinge adjusting screw can for instance be provided in pin housing 14. Because the hinge adjusting screw extends partially in the elongate cavity, the height thereof is limited. The freedom of movement in the height direction of the pin is thus limited. It will be apparent to the skilled person that the hinge adjusting screw can be arranged in similar manner on the lower side of the pin housing in order to thus create the same effect.

Figure 5 further illustrates a seesaw action of cooking plates 2, 3. Arranged on a side of the cooking plates lying opposite the hinge is the lever (not shown in figure 5). This exerts a force F1 on the cooking plates and, as a result, an upward directed force F2 which is caused in the hinge by the tilting around the bake. Because the hinge is adjustable in a height direction, the pin arranged on one of the cooking plates moves in the height Y. The hinge adjusting screw 16 limits the height Y in which the pin can move. The cooking plates will thus lie at an angle relative to each other in the closed position. At least one cooking plate adjusting screw which holds cooking plates 2, 3 at a minimum distance relative to each other is provided for this purpose. The at least one cooking plate adjusting screw is arranged on one of the cooking plates and is controllable in a height direction Z. Cooking plate adjusting screw 17 can be arranged in a similar manner as hinge adjusting screw 16, i.e. by means of a threaded bore which surrounds the cooking plate adjusting screw 17. The at least one cooking plate adjusting screw 17 and the hinge adjusting screw 16 are preferably adjusted such that the cooking plates lie substantially parallel to each other in a closed position. It will be apparent that the cooking plate adjusting screw can also be arranged at the back, whereby both a maximum and minimum height of the cooking plates can be set.

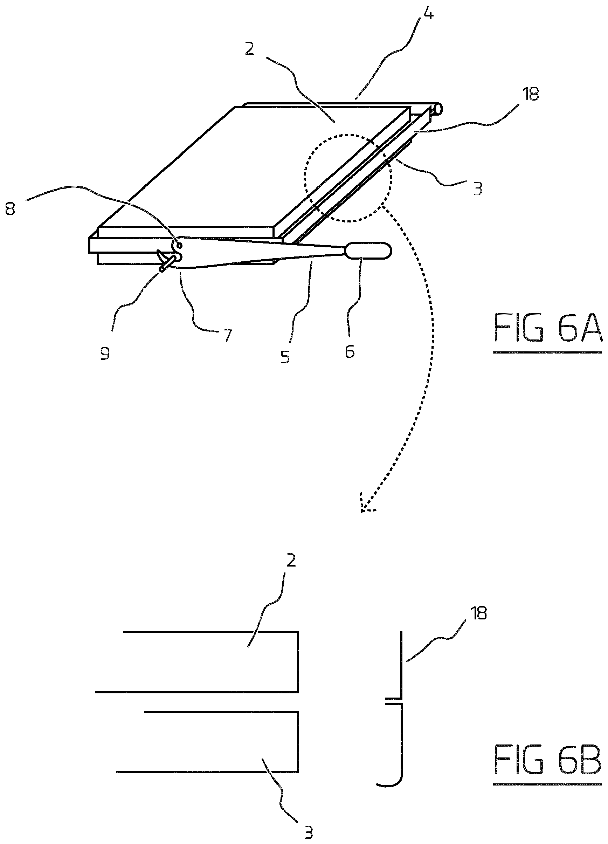

Figure 6 illustrates a cooking device according to any one of the foregoing embodiments, with the difference that the cooking device comprises a further splash edge 18 which is situated at the position of the cooking plates when the cooking plates are in a closed position and which extends at a distance from the cooking plates along substantially the whole periphery of the cooking plates, such that outflow is at least partially obstructed. Outflow can for instance be a part of the mass which is located between the cooking plates and flows out due to the closing movement thereof. Outflow can for instance also be steam vapours created by the water in the bake which is evaporated by the heat of the cooking plates. It will be apparent to the skilled person that the substantially whole periphery is the periphery wherein the opening between the cooking plates is directed substantially toward the area surrounding the cooking device. The splash edge can thus also extend along the whole periphery of the cooking plates. When a rectangular cooking plate with side walls is for instance used, splash edge 18 can extend along the two side walls and a front side wall. A rear side wall of the rectangular cooking plate may for instance not be surrounded by a splash edge here. It will however be apparent to the skilled person that the hinge also functions partially as splash edge.

The lever further preferably has a handle which is situated outside a heat zone of the at least one first and at least one second cooking plate. The boundaries of the heat zone are imaginary offset boundaries lying at a distance of a maximum of 30 cm from the periphery of the first and second cooking plates. In other words, the heat zone is an imaginary zone which the handle of the cooking device must be situated outside of. It will be apparent to the skilled person that the heat radiated by the cooking plates can still reach the handle. Due to the distance travelled to the handle, the heat will however be so low that it is practically negligible. It will be apparent to the skilled person that any embodiment in which the handle remains practically unexposed to an outflow of steam vapours or mass is a desired embodiment. An embodiment as known in the prior art, wherein the handle is situated straight above the cooking plates, is not optimal. Such known embodiments have the drawback that the steam vapours flowing out from between the cooking plates heat the handle and, as a result, create a dangerous situation for the user of the cooking device.

Figure 6A illustrates a cross-section of a part of figure 6 in which an embodiment of the splash edge is shown. Figure 6A particularly shows that the splash edge extends between the cooking plates at the position of the opening. The splash edge can preferably also be provided with a catching edge which catches outflow and, if desired, discharges it away from the user.

The skilled person will appreciate on the basis of the above description that the invention can be embodied in different ways and on the basis of different principles. The invention is not limited here to the above described embodiments. The above described embodiments and the figures are purely illustrative and serve only to increase understanding of the invention. The invention is not therefore limited to the embodiments described herein, but is defined in the claims.

## Claims

1. Cooking device (1), comprising:
- a first cooking plate (2) and a second cooking plate (3) between which a bake can be baked;
- at least one hinge (4) which couples the first cooking plate (2) and second cooking plate (3) such that the first and second cooking plate are movable relative to each other between an open and a closed position, wherein the at least one hinge has a height-adjusting mechanism (12) configured to set a distance between the first and second cooking plate in the closed position.

2. Cooking device according to claim 1, wherein the hinge comprises a pin (13) which is arranged on at least one of the first or second cooking plate and a pin housing (14) which surrounds the pin (13), wherein the pin housing (14) is arranged on the other of the at least one first or second cooking plate, such that the pin (13) is rotatable in the pin housing (14).

3. Cooking device according to the foregoing claim, wherein the pin housing has an elongate cavity (15) along an upward direction in order to give the pin (13) a freedom of movement in the upward direction.

4. Cooking device according to any one of the foregoing claims 2-3, wherein the pin housing (14) is provided with at least one hinge adjusting screw (16) which limits the freedom of movement of the pin (13) in the elongate cavity (15).

5. Cooking device according to claims 2-4, wherein at least one of the first and second cooking plate is provided with at least one cooking plate adjusting screw (12) which holds the first and second cooking plates at a minimum predetermined mutual distance in the closed position.

6. Cooking device according to any one of the foregoing claims, wherein the cooking device further has a lever (5) which is connected pivotally to the first cooking plate (2) and is provided with an engaging segment (7) configured to engage the second cooking plate (3) in the closed position in order to press the cooking plates toward each other.

7. Cooking device according to claim 6, wherein the lever (5) is arranged on an edge lying opposite the at least one hinge (4).

8. Cooking device according to any one of the claims 6-7, wherein the lever is connected via a shaft (8) to the first cooking plate (2) and further comprises a handling segment (6), wherein the handling segment (6) is connected fixedly to the engaging segment (7) such that by pivoting the handling segment a force is exerted on the second cooking plate by the engaging segment (7).

9. Cooking device according to claim 8, wherein a distance (A) over which the handling segment (6) extends is preferably at least 5 times greater than a distance (B) over which the engaging segment extends, preferably at least 6 times greater, preferably at least 7 times greater.

10. Cooking device according to any one of the foregoing claims 7-9, wherein the second cooking plate (3) comprises a protrusion (9) which is provided to be engaged by the engaging segment (7).

11. Cooking device according to the foregoing claim, wherein the engaging segment (5) comprises an opening (10) which is provided to receive the protrusion (9).

12. Cooking device according to the foregoing claim, wherein the opening (10) is bounded by an engaging edge (11) which is provided to engage the protrusion (9) and press the cooking plates toward each other in the closed position.

13. Cooking device according to any one of the foregoing claims 7-12, wherein the handling segment (6) has a length, measured from the shaft (8), which is preferably greater than 30 cm, more preferably greater than 40 cm, most preferably greater than 50 cm.

14. Cooking device according to any one of the foregoing claims, wherein the cooking device further comprises a splash edge (18) situated at the position of the cooking plates and extending at a distance from the cooking plates along substantially a whole periphery of the cooking plates, such that outflow is at least partially obstructed.

15. Cooking device according to any one of the foregoing claims, wherein the cooking device has a heat zone with boundaries which lie a maximum of 30 cm from a periphery of the first and second cooking plate, wherein the lever comprises a handle which is situated outside the heat zone of the cooking device.
